# EUROPEAN PATENT APPLICATION

(11) **EP 4 464 919 A1**
(43) Date of publication of application: **20.11.2024**
(21) Application number: 23173711.5
(22) Date of filing: 16.05.2023
(51) Int. Cl.: F16K 11/083, F16K 5/16, F16K 31/524, F16K 5/20, B60K 11/02

(54) **ROTATING MULTIPORT VALVE**

(71) Applicant: MoldTecs-01-2022 GmbH, 38667 Bad Harzburg (DE)
(72) Inventor: Lardeux, Sébastien, 53410 Saint Ouen Des Toits (FR); Foulboeuf, Gwena l, 53260 ENTRAMMES (FR); Warnery, Stéphane, 53970 L'Huisserie (FR); Manzella, Tony, 53000 Laval (FR); Badibanga, Xavier, 35000 Rennes (FR)
(74) Representative: STT Sozietät Thews & Thews

(57) **Abstract**

A multiport valve module system, comprising a valve housing (1), having a central axis X, which encloses a working chamber (1.1) having an inner housing surface (1.6) and has a plurality of ports (1.3a-1.3c) for supplying and/or discharging a medium into or out of the working chamber (1.1). The valve housing (1) includes a cover (1.2) that is assembled to the valve housing (1) for sealing the working chamber (1.1). The system having valve body (2) which is drivable about the axis X and in the axial direction in the working chamber (1.1) with an outer valve surface (2.2) and a at least on channel (2a, 2b) with plurality of openings on the valve surface (2.2). The system having a drive shaft (3.1) for connecting a drive with the valve body (2) with the drive shaft (3.1) guided through the cover (1.2). The rotatable multiport valve module system is said to be fast and easy to switch at the same time. For that the torque on the drive shaft (3.1) is permanently transferred to the valve body (2) such that the valve body (2) rotates synchronously with the drive shaft (3.1) when the drive shaft (3.1) is driven by a drive and cams (1.4a, 2.1a) are provided at the valve body (2) and/or at the valve housing (1), which cause a translational motion of the valve body (2) in axial direction.

## Description

### TECHNICAL FIELD

The invention relates to a multiport valve module system, comprising a valve housing, having a central axis X, which encloses a working chamber having an inner housing surface and has a plurality of ports for supplying and/or discharging a medium into or out of the working chamber. The multiport valve includes also a cover assembled to the valve housing for sealing the working chamber. The module system includes a valve body placed in the working chamber and be rotatable about the axis X and in direction of the axis X and having an outer valve surface and at least one channel with plurality of openings on the valve surface. Furthermore, a drive shaft for connecting a drive with the valve body with the drive shaft guided through the cover is part of the multiport valve module system.

### BACKGROUND

A rotatable multi-way valve is already known from EP 3 109 522 A1, in which the torque of the drive shaft is transmitted to the valve body via two driving discs that can be rotated with backlash relative to each other. According to US 2013/029259A1, the translatory movement of the valve body is initiated by a planetary gear.

It is an object of the present invention to design and arrange a rotatable multiport valve module system in such a way that fast and at the same time easy switching is ensured.

According to an aspect of the invention, the object is achieved by permanently transferring the torque on the drive shaft to the valve body such that the valve body rotates synchronously with the drive shaft when the drive shaft is driven by a drive. In Addition to that permanent transmission cams are provided at the valve body and/or at the valve housing, which cause a translational motion of the valve body in direction of the axis X synchronously with the rotation. The permanent torque is directly transferred from the drive shaft to the valve body to ensures that the translational motion of the valve body takes place simultaneously with the initiation of the rotary movement. Permanent drive and direct drive are best achieved by connecting the drive shaft and the valve body free from backslash or by forming the drive shaft and the valve body into a one-piece component. By lifting the valve body directly from the rotation of the drive shaft, the friction between the inner housing surface and the valve surface or gaskets is reduced from the beginning of the rotation, so that in addition to a fast switching of the valve body, less force is required. For the permanent drive the drive shaft is directly form-fittingly and/or frictionally coupled to the valve body. The direct transmission of the torque ensures that the rotation of the shaft has the same speed as the rotation of the valve body. There is no transmission so that the transmission of the two rotary movements of the drive shaft and the valve body being 1:1.

The valve housing can have a complex structure forming several working chambers, into each of which a valve body can be inserted. The design according to the invention forms a modular system that allows valve bodies to be replaced as required. The wording of a plurality of openings on the valve surface conceptually summarise the inlet and outlet openings of each channel in the valve body. The axial direction, the radial direction and the coaxial positions have a meaning in relation to the central axis X. Rotationally symmetric includes at least partially rotationally symmetric, likewise conical or spherical also includes at least partially conical or spherical.

According to a further aspect of the invention, the valve body has a sliding surface and the valve housing has a bearing surface and the valve body can be preloaded and placed in the axial direction with the sliding surface against the bearing surface, where the bearing surface and/or the sliding surface form a cam profile in the circumferential direction with the cams that extend in axial direction. To provide a simple construction the sliding surface with the cams is integrated in the shape of the valve body and the bearing surface with the cams is integrated in the shape of the valve housing. The valve housing and the valve body are preferably made of a non-abrasive material which, depending on the medium for which the valve is used, has very good sliding properties and is largely free of wear. Plastics are very well suitable for this. The cams engage with each other in the circumferential direction with essentially free from backlash. The cams are designed and arranged in such a way that a rotation of the valve body about the central axis X necessarily causes a translational motion of the valve body in the axial direction.

According to another aspect of the invention, the housing surface and the valve surface have at least in part a rotationally symmetrical, preferably a conical or a spherical geometry, such that the two surfaces can be pressed against each other in axial direction. The separation of the two surfaces by the translational motion is best achieved by conical geometries, because due to such a geometry the gap between the housing surface and the valve surface opens uniformly over the entire surfaces. This is not the situation with a spherical geometry. Depending on the properties of the chosen plastic and the force with which the valve body is preloaded against the valve housing, the ports in the housing can be sealed with the openings without an additional gasket.

According to some embodiments, a sealing is provided between the valve surface and the housing surface. That sealing ensures to seal the openings against the ports. This sealing can be achieved by individual gaskets or by overmolding the valve surface and/or the housing surface locally around the respective opening or port with any sealing material. It is also an alternative to provide this sealing by overmolding the valve surface and/or the housing surface entirely with sealing material. Preferably the gaskets are assembled around the circumference of the openings or the ports and between the valve surface and the housing surface. The respective opening in the valve body is sealed with a gasket against the corresponding port in the housing.

According to some special embodiments, the gasket is designed as a resilient element by means of which the valve body can be preloaded against the housing. The elasticity and geometry of these gaskets is such that no separate spring element is necessary to preload the valve body against the housing. Rubber gaskets are preferred for this purpose. The more obtuse the angle of a conical shape is, the greater the force of the gaskets in the direction of the axis X.

According to some embodiments, the cover has a hole having an inner surface, the inner surface being designed to seal the drive shaft and to pivote the valve body. The inner surface has for example a cylindrical or a coaxial shape and provides two different functions. The drive shaft is sealed with respect to the cover by means of a gasket placed in the hole. The stem of the valve body is pivoted on the inner surface of the hole.

According to some embodiments, a spring element is assembled between the valve housing and the valve body, by means of which the valve body can be preloaded in axial direction against the housing. The spring element is designed as a spring washer or as a coil spring and is assembled substantially coaxially with the stud. Regarding the valve body, the spring element and the cams are arranged on opposite sides of the valve body. The spring element can be assembled on the lower side, the narrower side of the valve body.

In this embodiment, which is also described in more detail in the figures, the gaskets are decompressed by the spring element and are compressed by the cams. Alternatively, the spring can also be assembled on the upper side or on the wider side of the valve body. In this position, the spring compresses the gaskets and the cams decompress the gaskets.

According to some embodiments, the valve body has a lower stud, which is formed coaxially with the axis X and is assembled in a recess in the valve housing. The stud is used to pivot the valve body in the lower part of the housing.

According to further embodiments, the valve body has a stem formed coaxially with the axis X and the stem is pivoted in the hole of the cover. The stem is used to bear the upper part of the valve body in the valve housing in the radial direction and for bearing the translational motion of the valve body.

According to some embodiments, the valve body and the drive shaft are constructed in two parts, where the stem has a receptacle in which the drive shaft is pivoted and coupled with a torque proof connection to the valve body. The two-part embodiment allows the translational motion of the valve body along the axis X to be separated from a movement of the drive shaft. According to some alternative embodiments the permanent drive and direct drive are best achieved by having the drive shaft and the valve body form a one-piece component.

According to a preferred embodiment, a rotatable multiport valve module system comprising exclusively the following components:
1. a valve housing with a working chamber having a housing surface with its own clam structure;
2. a cover as part of the valve housing for closing the working chamber;
3. a valve body with its own clam structure and with an outer valve surface;
4. a drive shaft which is guided through the cover to rotate the valve body;
5. a spring element by means of which the valve body can be preloaded against the valve housing;
6. a seal arranged between the drive shaft and the housing;
7. a plurality of gaskets arranged between the housing surface and the valve surface.

The cams are integrated in the respective component for the housing and the valve body. The housing and the body, each is produced with the cam structure in one molding process. The cams slide on each other due to the pre-load of the spring element. The permanent torque is directly transferred from the drive shaft to the valve body to ensures that the translational motion of the valve body takes place simultaneously with the initiation of the rotary movement. By lifting the valve body directly from the rotation of the drive shaft, the friction between the inner housing surface and the valve surface or gaskets is reduced from the beginning of the rotation, so that in addition to a fast switching of the valve body less force is required. Preferably the outer conical valve surface and the housing surface have a conical or spherical geometry. For the torque a torque proof connection between drive shaft and the vale body is realized with a non-rotatably coupling or a positive locking.

It is further object of the present invention to provide a system consisting of a rotating multiport valve module system and of one or more components of a cooling system for a Battery Electric Vehicle or a Fuel Cell Electric Vehicle or any other cooling system for vehicles or for machines or for engines, in particular comprising a pump, a cooler and tube connections between said components.

It is further object of the present invention to provide a method for moving a rotating multiport valve module system comprising a valve body with an outer valve surface and a valve housing with a working chamber having a housing surface, said working chamber being closable by a cover and the valve body being able to be preloaded against the valve housing, characterized in that the valve body and the valve housing are designed each having integral cam profiles which slide on each other in the circumferential direction about an axis X such that, by the valve body being rotated about an axis X, the valve body is simultaneously in translational motion in the direction of the axis X. Preferably the outer valve surface and the housing surface have a conical or spherical geometry.

### BRIEF DESCRIPTION OF THE DRAWINGS

Various aspects of the invention, including its features and advantages, will be readily understood from the example embodiments discussed in the following detailed description and the accompanying drawings, in which:
- Figure 1: illustrates an exploded view drawing of a multiport valve module system,
- Figure 2: illustrates a perspective view on the valve body and the cover,
- Figure 3a: illustrates a sectional view of a closed valve,
- Figure 3b: illustrates a sectional view of an open valve,
- Figure 4a: illustrates a sectional view of a 4-way-valve in a first position,
- Figure 4b: illustrates a sectional view of a 4-way-valve in a second position,
- Figure 5: illustrates a diagram of the movements of the valve body compared to the drive shaft during a rotation of 90 degrees.

### DETAILED DESCRIPTION

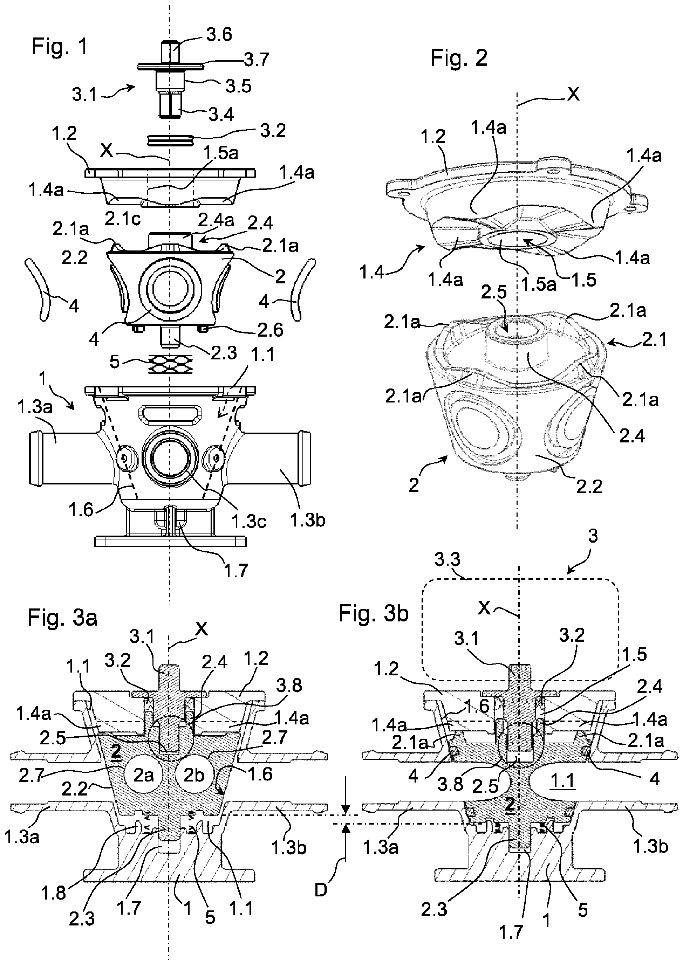

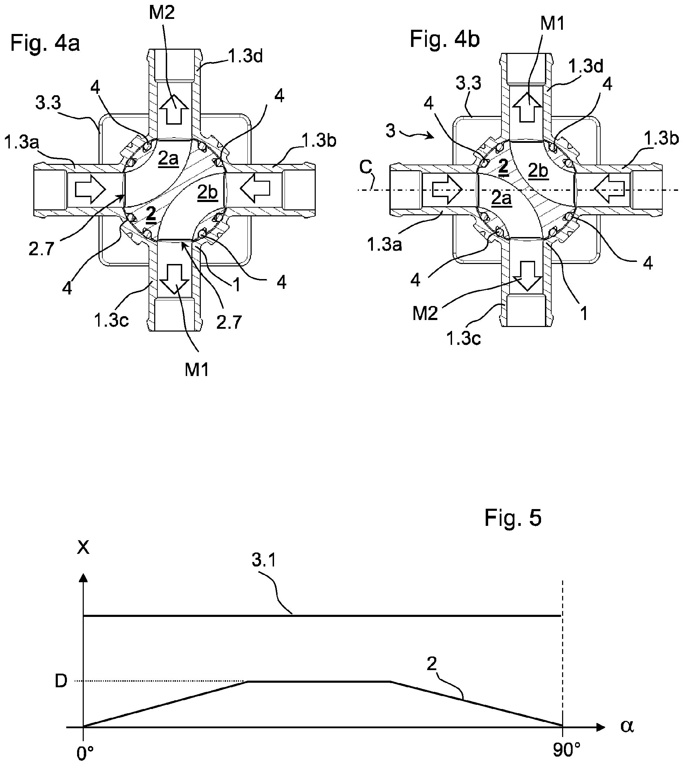

Figures 1 to 4b illustrate the same embodiments of a multiport valve module system comprising a valve housing 1 with a cover 1.2 for closing a working chamber 1.1 inside of the valve housing 1. The cover 1.2 is part of the valve housing 1. The multiport valve module system comprises also a valve body 2 located in the working chamber 1.1. The valve body 2 is driven by a drive 3 with a motor 3.3 and a drive shaft 3.1 around an axis X. The working chamber 1.1 having an inner housing surface 1.6 and a plurality of ports 1.3a-1.3d for supplying and/or discharging mediums M1, M2 (figs. 4a, 4b) into or out of the working chamber 1.1. The housing surface 1.6 has a conical shape which is parallel to a conical outer surface 2.2 of the valve body 2.

The ports 1.3a-1.3d are designed as nozzles onto which, for example, a hose or a plastic tube can be plugged. As illustrated in fig. 4a and 4b the valve housing 1 has four ports 1.3a-1.3d, whereby two ports 1.3a-1.3d can be connected to each other through a respective channel 2a, 2b in the valve body 2. Each channel 2a, 2b has two openings 2.7 on the valve surface 2.2. The medium M1, M2 flows into and out of the channels 2a, 2b through the openings 2.7.

According to fig. 4a the medium M1 is flowing into port 1.3b, through the channel 2b and out of port 1.3c. In the illustration according to fig. 4b, the valve body 2 is shown rotated 90° to the right compared to the illustration according to fig. 4a. Here the medium M1 flows also into port 1.3b, through the channel 2b but out of port 1.3d. The situation is similar with port 1.3a. Here the medium M2 flows according to fig. 4a within the channel 2a and out of port 1.3d. According to fig. 4b the medium M2 flows out of port 1.3c.

Each of the respective opening 2.7 in the valve body 2 is sealed with a gasket 4 against the corresponding port 1.3a-1.3d in the valve housing 1. The gaskets 4 are assembled around the circumference of the openings 2.7 at the valve body 2 and located between the valve surface 2.2 and the housing surface 1.6. The gaskets 4 are also shown, for example, in the sectional view according to fig. 3b. This sectional view corresponds to cross-section C according to fig. 4b.

According to a further, not shown embodiment, the multiport valve module system has no such gaskets 4 assembled around the circumference of the openings 2.7 at the valve body 2. The seal between the valve body 2 and the valve housing 1 is achieved by precisely profiled surfaces of the housing surface 1.6 and the outer surface 2.2.

According to other, not shown embodiments, the multiport valve module system can also have two, three or more than four ports. In some embodiments not shown several valve housings with one valve body each can be arranged one behind the other in the direction of the axis X. All valve bodies are torque proof connected to the drive shaft so that they rotate synchronously to each other and to the drive shaft.

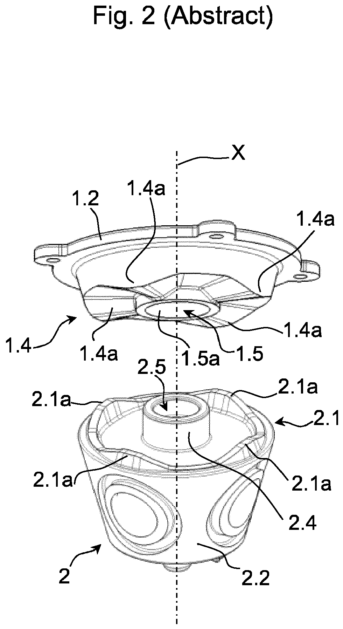

As illustrated in fig. 2 the valve body 2 has a sliding surface 2.1 and the valve housing 1 has a bearing surface 1.4 to generate a translational motion of the valve body 2. The sliding surface 2.1 and the bearing surface 1.4 each form a cam profile in the circumferential direction with the cams 1.4a, 2.1a extending in the axial direction. The cams 1.4a, 2.1a engage with each other in the circumferential direction with essentially free from backlash. To provide a simple construction the cams 2.1a with the sliding surface 2.1 are integrated in the valve body 2 and cams 1.4a with the bearing surface 1.4 are integrated in the valve housing 1. The valve housing 1 and the valve body 2 are preferably made of a non-abrasive material which, depending on the medium for which the valve is used, has very good sliding properties and is largely free of wear. Plastics are very well suitable for this.

The valve body 2 can be preloaded by a spring element 5 and placed in the axial direction with the sliding surface 2.1 against the bearing surface 1.4. Following the construction in view of the invention, the spring element 5 is assembled opposite to the cams 1.4a, 2.1a on the other side of the valve body 2. This construction ensures that a rotation of the valve body 2 about the central axis X necessarily causes a translational motion of the valve body 2 in the axial direction. Depending on the geometry of the cams 1.4a, 2.1a and due to the preload caused by the spring element 5, the valve body 2 is moved alternately in the direction of the axis X in the valve housing 1.

According to the illustrated example the spring element 5 is assembled at the bottom of the working chamber 1.1 between the valve body 2 and the valve housing 1. The spring element 5 is assembled on the lower side, the narrower side of the valve body. As illustrated in fig. 3 a collar 1.8 is provided to guide the spring element 5. In the example shown, the spring element 5 presses the valve body 2 upwards against the valve housing 1. The downward movement of the valve body 2 is caused by the cams 1.4a, 2.1a and the upward movement by the spring element 5. This has the effect that the gaskets 4 are decompressed by the spring element 5 and are compressed by the cams 1.4a, 2.1a. The geometry of the cams 1.4a, 2.1a is selected in such a way that the valve body 2, starting from a closed position, lifts completely during a 90° degree rotation and lowers again into the closed position. The motion of the valve body 2 is shown in figure 5. The cams 1.4a, 2.1a generate a movement of the valve body 2 in the direction of the axis X by a distance D shown in fig. 3a and 3b. The drive shaft 3.1 does not make a translational motion during any rotation.

The basic principle of the invention is that by lifting the valve body 2 from the rotation of the drive shaft 3.1 the friction between the housing surface 1.6 of the valve housing 1 and the outer surface 2.2 of the valve body 2 or the gaskets 4 is reduced from the beginning of the rotation, so that in addition to a fast switching of the valve body 2, less force is required. This advantage is especially significant when no gaskets 4 are provided. In this case the friction to be overcome between the outer surface 2.2 and the housing surface 1.6 is considerably greater than the friction between the gaskets 4 and the housing surface 1.6. The effect to reduce the friction with starting the rotation becomes possible due to the conical geometry or any similar geometry like spherical. As also shown in figures 3a and 3b, the conical housing surface 1.6 of the valve housing 1 and the outer surface 2.2 of the valve body 2 are parallel to each other. Through any translational motion of the valve body in the direction of the axis X, the distance between the two surfaces 1.6, 2.2 is varied in radial direction to the axis X.

To drive the valve body 2 the drive shaft 3.1 is performed through a hole 1.5 in the cover 1.2. The hole 1.5 has an inner surface 1.5a which is designed to seal the drive shaft 3.1 and to pivote the valve body 2. For sealing the drive shaft 3.1 a gasket 3.2 is assembled between the drive shaft 3.1 and the inner surface 1.5a. The gasket 3.2 is sealing a gasketing surface 3.5 of the drive shaft 3.1 with an inner surface 1.5a of the hole 1.5.

The valve body 2 and the drive shaft 3.1 are constructed in two parts. The valve body 2 has a stem 2.4 which has a receptacle 2.5 in which the drive shaft 3.1 is pivoted and coupled with a torque proof connection 3.8 and free from backslash to the valve body 2. For that coupling the drive shaft 3.1 has a pin 3.4 having a hexagonal cross-section coupled to a corresponding cross-section in the receptacle 2.5.

For the movement of the valve body 2 the rotation is transferred from an electric drive 3 to the drive shaft 3.1 and from the drive shaft 3.1 to the valve body 2. The drive shaft 3.1 has a drive pin 3.6 for a rotary joint with the drive 3. The valve body 2 rotates synchronously with the drive shaft 3.1 when the drive shaft is driven by the drive. To achieve a synchronous rotation a permanent torque is directly transferred from the drive shaft 3.1 to the valve body 2 to ensures that the translational motion of the valve body 2 takes place simultaneously with the initiation of the rotary movement of the drive. The valve body 2 moves relative to the drive shaft 3.1 in the direction of axis X, which is why the coupling using the pin 3.4 and the torque proof connection 3.8 are designed as a sliding connection in direction of axis X. For keeping the drive shaft 3.1 in a stationary position in axial direction, the drive shaft 3.1 has a shoulder 3.7.

At the top the valve body 2 is pivoted by a stem 2.4. For this purpose, the stem 2.4 has a bearing surface 2.4a, over which the valve body 2 is pivoted in the hole 1.5. At the bottom, the valve body 2 has a stud 2.3, over which it is pivoted in a recess 1.7 of the valve housing 1. Limit stops 2.6 are provided around the stud 2.3 in order to limit the rotational movement of the valve body 2 by a certain amount, for example more than 180°.

## Claims

1. A multiport valve module system, comprising
a) a valve housing (1), having a central axis X, which encloses a working chamber (1.1) having an inner housing surface (1.6) and has a plurality of ports (1.3a-1.3d) for supplying and/or discharging a medium (M1, M2) into or out of the working chamber (1.1);
b) the valve housing (1) includes a cover (1.2) that is assembled to the valve housing (1) for sealing the working chamber (1.1);
c) a valve body (2) placed in the working chamber (1.1) and be rotatable about the axis X and in direction of the axis X and having an outer valve surface (2.2) and at least one channel (2a, 2b) with plurality of openings (2.7) on the valve surface (2.2);
d) a drive shaft (3.1) for connecting a drive with the valve body (2) with the drive shaft (3.1) guided through the cover (1.2),
**characterized in that**
e) the torque on the drive shaft (3.1) is permanently transferred to the valve body (2) such that the valve body (2) rotates synchronously with the drive shaft (3.1) when the drive shaft (3.1) is driven by a drive and
f) cams (1.4a, 2.1a) are provided at the valve body (2) and/or at the valve housing (1), which cause a translational motion of the valve body (2) in direction of the axis X.

2. Multiport valve module system according to claim 1,
**characterized in that**
the valve body (2) has a sliding surface (2.1) and the valve housing (1) has a bearing surface (1.4) and the valve body (2) can be preloaded and placed in the axial direction with the sliding surface (2.1) against the bearing surface (1.4), where the bearing surface (1.4) and/or the sliding surface (2.1) form a cam profile in the circumferential direction with the cams (1.4a, 2.1a) that extend in axial direction.

3. Multiport valve module system according to claim 1 or 2,
**characterized in that**
the cams (1.4a, 2.1a) are designed and arranged in such a way that a rotation of the valve body (2) about the central axis X necessarily causes a translatory movement of the valve body (2) in the axial direction.

4. Multiport valve module system according to any one of the preceding claims,
**characterized in that**
the housing surface (1.6) and the valve surface (2.2) have at least in part a rotationally symmetrical, preferably a conical or a spherical geometry such that the two surfaces can be pressed against each other in axial direction.

5. Multiport valve module system according to any one of the preceding claims,
**characterized in that**
a sealing (4) is provided between the valve surface (2.2) and the housing surface (1.6).

6. Multiport valve module system according to any one of the preceding claims,
**characterized in that**
the gasket (4) is designed as a resilient element by means of which the valve body (2) can be preloaded against the housing (1).

7. Multiport valve module system according to any one of the preceding claims,
**characterized in that**
the cover (1.2) has a hole (1.5) having an inner surface (1.5a), the inner surface (1.5a) being designed to seal the drive shaft (3.1) and to pivote the valve body (2).

8. Multiport valve module system according to any one of the preceding claims,
**characterized in that**
a spring element (5) is provided between the valve housing (1) and the valve body (2), by means of which the valve body (2) can be preloaded in axial direction against the housing (1).

9. Multiport valve module system according to any one of the preceding claims,
**characterized in that**
the valve body (2) has a lower stud (2.3), which is formed coaxially with the axis X and is assembled in a recess (1.7) in the valve housing (1).

10. Multiport valve module system according to any one of the preceding claims,
**characterized in that**
the valve body (2) has a stem (2.4) formed coaxially with the axis X and the stem (2.4) is pivoted in the cover (1.2).

11. Multiport valve module system according to any one of the preceding claims,
**characterized in that**
the valve body (2) and the drive shaft (3.1) are constructed in two parts, where the stem (2.4) has a receptacle (2.5) in which the drive shaft (3.1) is pivoted and coupled with a torque proof connection to the valve body (2).

12. Multiport valve module system according to any one of the preceding claims,
**characterized in that**
with relation to the valve body (2), the spring element (5) is arranged opposed to the cams (1.4a, 2.1a) in the axial direction.

13. A rotatable multiport valve module system comprising exclusively the following components:
1. a valve housing (1) with a working chamber (1.1) having a housing surface (1.6) with its own clam structure (1.4a);
2. a cover (1.2) as part of the valve housing (1) for closing the working chamber (1.1);
3. a valve body (2) with its own clam structure (2.1a) and with an outer valve surface (2.2) with a conical or spherical geometry;
4. a drive shaft (3.1) which is guided through the cover (1.2) to rotate the valve body (2);
5. a spring element (5) by means of which the valve body (2) can be preloaded against the valve housing (1);
6. a seal (3.2) arranged between the drive shaft (3.1) and the housing (1);
7. a plurality of gaskets (4) arranged between the housing surface (1.6) and the valve surface (2.2).

14. A system consisting of a rotating multiport valve module system according to any one of the preceding claims and of one or more components of a cooling system for a Battery Electric Vehicle or a Fuel Cell Electric Vehicle or any other cooling system for vehicles or for machines or for engines, in particular comprising a pump, a cooler and tube connections between said components.

15. A method for moving a rotating multiport valve module system comprising a valve body (2) with an outer valve surface (2.2) with a conical or spherical geometry and a valve housing (1) with a working chamber (1.1) having a housing surface (1.6) with a conical or spherical geometry, said working chamber (1.1) being closable by a cover (1.2) and the valve body (2) being able to be preloaded against the valve housing (1), **characterized in that** the valve body (2) and the valve housing (1) are designed each having integral cam profiles (2.1a, 1.4a) which slide on each other in the circumferential direction about an axis X such that, by the valve body (2) being rotated about an axis X, the valve body (2) is simultaneously in translational motion in the direction of the axis X.
